# EUROPEAN PATENT APPLICATION

(11) **EP 1 445 135 A1**
(43) Date of publication of application: **11.08.2004**
(21) Application number: 04100468.0
(22) Date of filing: 09.02.2004
(51) Int. Cl.: B60J 3/00

(54) **External sun visor for vehicles, particularly for industrial vehicles**

(30) Priority: 07.02.2003 IT TO20030089
(71) Applicant: Selmat Automotive S.p.A., 10090 Cascine Vica - Rivoli (IT)
(72) Inventor: Maccherrone, Michele, 10123 Torino (IT)
(74) Representative: Jorio, Paolo, Dr. Ing.

(57) **Abstract**

An external sun visor (1) for vehicles, particularly for industrial vehicles, has a panel (2) which can be placed in a position facing the upper portion (8) of the windscreen (9) of a vehicle (7) and is elongate along one of its axes (10; 10a) which is horizontal and orthogonal to the direction of advance (11) of the said vehicle (7); the panel (2) consists of an intermediate plate element (12) which remains unchanged for a plurality of vehicles different from each other, and two lateral plate elements (13) which are placed on opposite sides of the intermediate plate element (12) and which can be selected from a plurality of different plate elements (13; 13a) according to the vehicle to which the visor (1) is to be fitted.

## Description

The present invention relates to an external sun visor for vehicles, particularly for industrial vehicles.

As is known, some industrial and commercial vehicles are provided with external visors, each comprising a sun visor panel made from plastic material and a plurality of brackets which fix this panel to the frame of the vehicle in a position facing an upper portion of the windscreen. In particular, this panel covers the whole width of the corresponding windscreen and has a specific shape and dimensions according to the size of the said windscreen and the aerodynamic and aesthetic characteristics of the vehicle to which it is to be fitted.

The known type of external visor described above is rather unsatisfactory, since known sun visor panels are made in one piece and/or formed in moulds which are relatively complex and therefore expensive. The complexity of the moulds is essentially due to the dimensions of the said moulds required in order to produce relatively long panels, with a length of 2.2 metres for example, capable of covering the whole width of the corresponding windscreen.

Moreover, the aforesaid moulds must be designed and manufactured in a dedicated way according to the characteristics of each type of visor, and therefore of each model of vehicle, with consequent high costs of design and production.

The object of the present invention is to provide an external sun visor for vehicles, particularly for industrial vehicles, which enables the aforesaid problems to be overcome in a simple and economical way, and which, in particular, is versatile.

According to the present invention, an external sun visor for vehicles, particularly for industrial vehicles, is provided, the visor comprising a panel which can be placed in a position facing an upper portion of a windscreen of a said vehicle and which is elongate along one of its axes extending, when in use, horizontally and orthogonally with respect to the direction of advance of the said vehicle, characterized in that the said panel comprises a first and at least a second plate element which are separate from each other and are aligned with each other along the said axis; the said first plate element remaining unchanged for a plurality of vehicles different from each other, while the said second plate element can be selected from a plurality of plate elements according to the vehicle to which the said visor is to be fitted.

The invention will now be described with reference to the attached drawings, which show a non-restrictive example of embodiment, in which:
Figure 1 is a perspective view of a preferred embodiment of an external sun visor for vehicles, particularly for industrial vehicles, according to the present invention;
Figure 2 is similar to Figure 1 and shows a variant of an element of Figure 1;
Figure 3 is a section taken through the line III-III of Figure 1 and shows on an enlarged scale a detail of the said Figure 1;
Figures 4 and 5 are similar to Figure 3 and show corresponding variants of the visor of Figure 1; and
Figure 6 shows schematically, in section and with parts removed for clarity, a further variant of the visor of Figure 1.

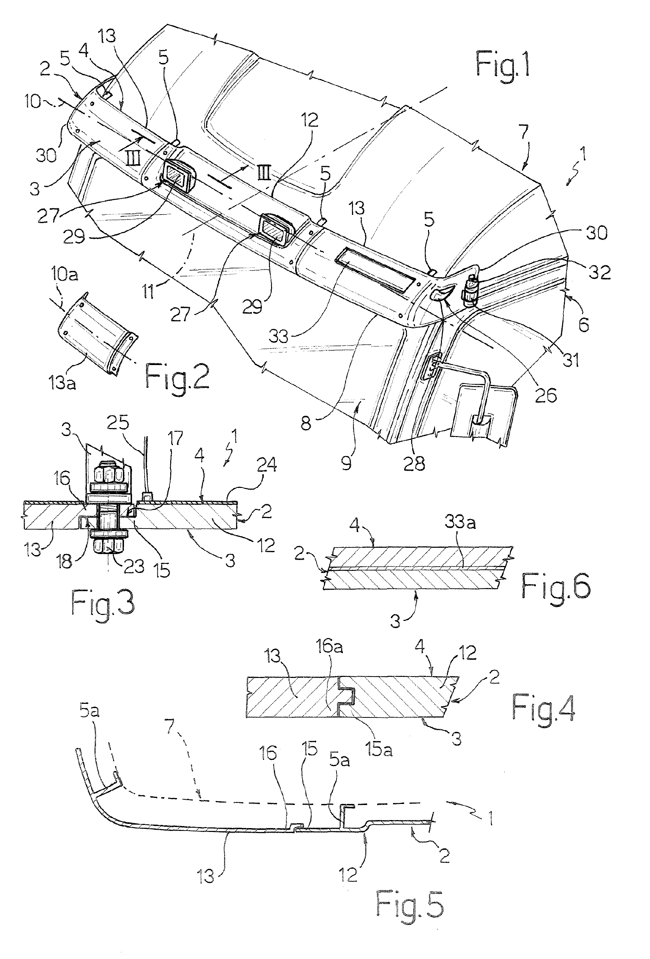

In Figure 1, the number 1 indicates an external visor comprising a panel 2, which is made from plastic material, particularly methacrylate or polycarbonate, and can be produced, for example, by injection moulding with granulated polymer, or by pressure or vacuum forming of a flat sheet made from extruded or cast thermoplastic material.

Preferably, the panel 2 is coloured, in a smoked colour for example, with pigments painted on to its front face 3 and/or rear face 4, or with pigments or additives incorporated directly in the plastic material from which it is made.

The visor 1 also comprises a plurality of brackets 5, which are fixed securely to the panel 2 on the one hand, and, on the other hand, to the cab 6 of a vehicle 7 and which ensure that the said panel 2 covers an external upper portion 8 of the windscreen 9 of the vehicle 7, in a position remote from the said portion 8.

The panel 2 is elongate along one of its axes 10 which is horizontal and orthogonal with respect to a longitudinal direction 11 of advance of the vehicle 7, covers the whole width of the portion 8, and comprises a central plate element 12 and two lateral plate elements 13 aligned with each other along the axis 10.

The element 12 can be fitted to a plurality of different models of vehicles in an identical way, while the elements 13 are made differently from each other, are placed on opposite sides of the element 12, are symmetrical with each other about a theoretical median longitudinal plane (not shown) and can be selected from a plurality of plate elements which differ from each in dimensions and/or profile, according to the specific model of vehicle to which the visor 1 is to be fitted.

By way of example, Figure 2 shows an element 13a which differs from the element 13 both in its length along its axis 10a and in respect of its shape and/or appearance, and is therefore suitable for a model of vehicle (not shown) other than the vehicle 7, but can be joined to the element 12 and to the cab of the corresponding vehicle in the same way as that specified for the element 13.

With reference to Figure 3, the elements 12, 13 comprise corresponding portions 15, 16 placed next to each other along the axis 10. Preferably, the portions 15, 16 have corresponding stepped profiles which are complementary to each other, in such a way as to form positioning recesses 17 and 18 respectively which are engaged by the other portion 16, 15 to maintain the continuity of the face 3 between the elements 12 and 13.

The portions 15, 16 have corresponding holes 21, 22 which are coaxial with each other and which are engaged by the same connecting bolt device 23, of a known type which is not described in detail, which fixes both elements 12, 13 to one of the brackets 5 and enables the variations in thermal expansion of the different components of the visor 1 to be compensated for when in use, as a result of the interposition of elastomeric elements between the said bracket 5 and the panel 2.

The visor 1 also comprises a de-icing device 24 (shown schematically), of the electrical resistance type, which is joined to the rear face 4 in order to melt any deposits of ice or snow on the panel 2 and which is supplied by the electrical system of the vehicle 7 by means of electrical cables 25 carried by the brackets 5.

As shown in Figure 1, the visor 1 also comprises a plurality of lighting devices carried by the elements 12, 13 and also supplied from the electrical system of the vehicle 7. In particular, these devices comprise a pair of side lights 26 or direction indicators and a pair of front headlights 27, these lamps (not shown) being housed and supported by hollow bodies 28, 29 connected to the axial ends 30 of the elements 13 and the element 12 respectively. Preferably, the bodies 28, 29 are made in one piece with the ends 30 and with the element 12 respectively.

Again with reference to Figure 1, the visor 1 also comprises a pouch 31, which is connected integrally to one of the elements 13 and forms, at least partially, a housing for a beverage container 32, in such a way as to cool the said beverages by means of the air flow encountered during the movement of the vehicle 7.

Finally, the panel 2 comprises an area 33, on its front face 3 for example, on to which texts, symbols and/or designs are glued or directly screen-printed.

In the variant shown in Figure 5, this area 33 is replaced by a sheet or fabric 33a embedded in one of the elements 12, 13, which must be at least partially transparent to permit the display of the symbols, designs and/or texts carried by the said sheet 33a. This solution is preferably implemented by moulding plastic material in a mould in which the sheet 33a has already been placed, in such a way as to produce a panel which includes the said sheet 33a and which is consolidated and subsequently shaped.

In the variant shown in Figure 4, the portions 15, 16 are replaced by portions 15a, 16a, which form a male profile and a female profile respectively, interlocked with each other and maintaining the continuity of the face 3 between the elements 12, 13. In variants which are not shown, the elements 12, 13 could be joined to each other by snap-fitting, by welding or by gluing.

In the variant shown in Figure 6, the brackets 5 are replaced by brackets 5a, in the form of appendages made in one piece with the plastic material of the elements 12, 13, so that the devices 23 are no longer required.

It is clear from the above description that the panel 2 makes it possible to reduce the dimensions and consequently the complexity and the costs of the forming moulds, since it is made in a plurality of separate elements which are subsequently joined together. At the same time, the panel 2 makes it possible to use one of these elements for different models of vehicle and to select the other elements according to the specific vehicle on which the said panel 2 is to be fitted.

Furthermore, the joint between the elements 12, 13 is very simple and enables a bracket 5 to be fixed to both elements 12, 13. The solution shown in Figure 6 also makes it possible to eliminate all the operations of fixing the brackets to the panel 2, since the brackets 5a are already made in one piece directly with the elements 12, 13.

The limited dimensions of the elements 12, 13 make it possible to support, essentially without risk of breakage, the devices 26, 27, the pouch 31, the area 33 and/or the sheet 33a, which can also be selected in accordance with the requirements of each vehicle and make the visor 1 even more versatile and useful for functions other than those of that sun visor.

Finally, it is clear from the above description that the visor 1 which is described can be modified and varied in ways which are not excluded from the scope of protection of the present invention.

In particular, the panel 2 could consist of a different number of plate elements and/or could be fitted on vehicles other than that illustrated. The panel 2 could also be connected to the vehicle 7 in a different way from that shown, and/or joining elements could be interposed between the elements 12, 13.

## Claims

1. External sun visor (1) for vehicles, particularly for industrial vehicles; the visor comprising a panel (2) which can be placed in a position facing an upper portion (8) of a windscreen (9) of a said vehicle (7) and is elongate along one of its axes (10; 10a) which extends, in use, horizontally and orthogonally with respect to the direction of advance (11) of the said vehicle (7); **characterized in that** the said panel (2) comprises a first plate element (12) and at least a second plate element (13) which are separate from each other and are aligned with each other along the said axis (10); the said first plate element (12) remaining unchanged for a plurality of vehicles differing from each other, while the said second plate element (13) can be selected from a plurality of different plate elements (13; 13a) according to the vehicle to which the said visor (1) is to be fitted.

2. Visor according to Claim 1, **characterized in that** the said panel (2) comprises a first intermediate plate element (12) which remains unchanged for a plurality of vehicles differing from each other, and two second lateral plate elements (13) positioned on opposite sides of the said first intermediate plate element (12) along the said axis (10) and selectable from a plurality of different plate elements (13; 13a) according to the vehicle to which the said visor (1) is to be fitted.

3. Visor according to Claim 1 or 2, **characterized in that** the said first and second plate elements (12, 13) comprise respective terminal portions (15, 16; 15a, 16a) joined together and bearing on each other along the said axis (10) and forming respective shaped profiles which are complementary to each other.

4. Visor according to any one of the preceding claims, **characterized in that** the said first and second plate elements (12, 13) comprise respective terminal portions (15a, 16a), joined together and bearing on each other and forming, respectively, a male profile and a female profile interlocked along the said axis (10).

5. Visor according to any one of the preceding claims, **characterized in that** it also comprises means (5a) of attaching the said panel (2) to the said vehicle; the said means of attachment comprising, for each of the said first and second plate elements (12, 13), at least one corresponding attachment bracket (5a) made in one piece with the said plate element (12, 13).

6. Visor according to any one of the preceding claims, **characterized in that** it comprises means (24) for de-icing the said panel (2), carried by at least one of the said first and second plate elements (12, 13).

7. Visor according to any one of the preceding claims, **characterized in that** it comprises support means (47; 47a) for visual information carried by at least one of the said first and second plate elements (12, 13).

8. Visor according to Claim 7, **characterized in that** the said support means (47a) for visual information are embedded in the material of at least one of the said first and second plate elements (12, 13); the said first and second plate elements (12, 13) being at least partially translucent.

9. Visor according to any one of the preceding claims, **characterized in that** it also comprises at least one lighting device (26, 27) carried by at least one of the said first and second plate elements (12, 13).

10. Visor according to any one of the preceding claims, **characterized in that** it comprises a pouch (31), connected to one of the said first and second plate elements (12, 13), for carrying a beverage container (32).
